Europäisches Patentamt

European Patent Office

Office européen des brevets

(19)

(11) EP 0 834 788 B1

(12) **FASCICULE DE BREVET EUROPEEN**

(45) Date de publication et mention
de la délivrance du brevet:
**09.07.2003 Bulletin 2003/28**

(51) Int Cl.⁷: **G05D 11/035**, F04B 13/02,
B67D 5/56, B01F 15/04

(21) Numéro de dépôt: **97402285.7**

(22) Date de dépôt: **01.10.1997**

(54) **Dispositif autonome d'asservissement d'au moins un débit d'un liquide secondaire à un débit d'un liquide principal**

Eigenständige Vorrichtung zur Regelung des Durchflusses einer Sekundärflüssigkeit im Verhältnis zum Durchfluss einer Primärflüssigkeit

Autonomous device for the flow control of a secondary fluid in relation to a primary fluid flow

(84) Etats contractants désignés:
**BE DE ES FI GB GR IE IT LU NL PT**

(30) Priorité: **03.10.1996 FR 9612082**

(43) Date de publication de la demande:
**08.04.1998 Bulletin 1998/15**

(73) Titulaire: **TotalfinaElf France**
**92800 Puteaux (FR)**

(72) Inventeur: **Chenu, Jacques**
**77500 Chelles (FR)**

(74) Mandataire: **Cabinet Hirsch**
**34, Rue de Bassano**
**75008 Paris (FR)**

(56) Documents cités:
**WO-A-94/04257      FR-A- 2 429 463**
**FR-A- 2 635 829      GB-A- 2 257 957**
**US-A- 3 831 617**

EP 0 834 788 B1

## Description

## DOMAINE TECHNIQUE

La présente invention concerne un dispositif autonome d'asservissement d'au moins un débit d'un liquide secondaire à un débit d'un liquide primaire disponible sous pression. Elle est destinée à la fabrication de carburants et de combustibles additivés et/ou colorés et/ou dénaturés, de lubrifiants additivés, à la préparation de prémélanges eau/émulsifiants servant à produire de la mousse pour la lutte contre les incendies, et de manière générale à la préparation de produits liquides à partir de plusieurs produits liquides de base.

L'invention trouve son application dans les raffineries de pétrole, les usines chimiques, les unités de traitement des eaux et l'industrie agroalimentaire.

## ETAT DE LA TECHNIQUE ANTERIEURE

De nombreux procédés mis en oeuvre dans différentes industries, exigent l'asservissement d'un débit de liquide à un autre débit de liquide variable. Par exemple l'injection en petite quantité d'un produit chimique dans un liquide en circulation dans une conduite. Un tel asservissement est réalisable au moyen de dispositifs connus qui mettent en oeuvre des vannes de régulation et/ou des pompes entraînées par des moteurs électriques ou pneumatiques. Ces dispositifs doivent être raccordés à des sources d'énergies. Ces raccordements sont généralement coûteux voire irréalisables dans certains cas, notamment lorsque l'asservissement doit être réalisé à bord d'un véhicule ou sur un site isolé. Un dispositif proportionneur autonome, automatique, connu apporte une solution partielle à ce problème. Il s'agit d'un proportionneur pour la fabrication d'un prémélange eau/émulsifiant, destiné à la production de mousse pour la lutte contre les incendies à partir d'eau sous pression et d'émulsifiant contenu dans un réservoir. Ce dispositif fonctionne sans apport d'énergie, autre que celle de l'eau sous pression qui sert à fabriquer la mousse. Ce dispositif comprend un moteur hydraulique volumétrique alimenté par l'eau sous pression, une pompe volumétrique alimentée par l'émulsifiant et un accouplement mécanique direct de l'arbre du moteur à celui de la pompe volumétrique. Les rotors de la pompe volumétrique et du moteur tournant rigoureusement à la même vitesse le rapport entre les deux débits est déterminé par les caractéristique volumétriques de la pompe et du moteur. Le rapport des débits d'eau et d'émulsifiant est donc fixe. Il est possible d'obtenir des rapports différents en remplaçant la pompe volumétrique par d'autres ayant des caractéristiques différentes. Avec cette solution il faut autant de pompes volumétriques que l'on souhaite obtenir de valeurs du rapport des débits eau/émulsifiant, sans toutefois avoir de possibilités de réglage à des valeurs intermédiaires. Cette solution est coûteuse et nécessite des opérations mécaniques de montage et de démontage relativement longues et délicates. Une autre solution connue limitée à deux valeurs de rapport de débits consiste à accoupler une deuxième pompe volumétrique de caractéristiques volumétriques différentes de celle de la première, à l'extrémité de l'arbre du moteur opposée à celle à laquelle est accouplée la première pompe.

Le document WO-A-9404257 décrit un dispositif autonome d'asservissement d'au moins un débit d'un liquide secondaire à un débit d'un liquide primaire, comprenant un moteur hydraulique, au moins une pompe volumétrique et des moyens mécaniques d'entraînement de la pompe par le moteur hydraulique.

## EXPOSE DE L'INVENTION

La présente invention a justement pour but de remédier à ces inconvénients et de fournir un dispositif autonome d'asservissement d'au moins un débit d'un liquide secondaire à un débit d'un liquide primaire disponible dans une conduite sous pression, comprenant un moteur hydraulique muni d'un tubulure d'alimentation en liquide primaire et d'une tubulure de sortie, au moins une pompe volumétrique munie d'une tubulure d'admission du liquide secondaire et d'une tubulure de refoulement, et des moyens mécaniques d'entraînement de la pompe par le moteur hydraulique, les axes du moteur hydraulique et de la pompe volumétrique étant disposés parallèlement, caractérisé en ce que le moteur hydraulique est du type à rotor excentré, les moyens mécaniques d'entraînement de la pompe sont à une vitesse réglable et que le dispositif comprend en outre des moyens d'alimentation automatique de la pompe volumétrique par du liquide primaire en cas de manque de liquide secondaire.

Grâce à ces moyens automatiques d'alimentation, la pompe ne risque pas de gripper par défaut d'alimentation.

Selon une autre caractéristique du dispositif de l'invention, les moyens mécaniques d'entraînement sont du type poulies/courroie. On pourra avantageusement utiliser un système de poulies étagées qui permet par des opérations manuelles simples de faire varier facilement le rapport des vitesses de rotation du moteur et de la pompe.

Selon une autre caractéristique du dispositif de l'invention, les moyens d'alimentation automatique de la pompe volumétrique comprennent une liaison hydraulique de la tubulure d'alimentation du moteur à la tubulure d'admission de la pompe, ladite liaison hydraulique étant munie d'un limiteur de débit.

Selon une autre caractéristique du dispositif de l'invention, les moyens d'alimentation automatique de la pompe volumétrique comprennent une liaison hydraulique de la tubulure de sortie du moteur à la tubulure d'admission de la pompe, ladite liaison hydraulique étant munie d'un limiteur de débit.

Selon une autre caractéristique du dispositif de l'invention, le limiteur de débit est une plaque à orifice calibré dont le diamètre est déterminé en fonction des caractéristiques hydrauliques de la pompe et du moteurs ainsi que de la pression du liquide primaire.

L'invention a aussi pour objet la préparation d'un composé liquide par mélange dans des proportions déterminées d'un liquide primaire et d'au moins un liquide secondaire.

Selon une caractéristique particulière de l'invention, le composé liquide préparé est un carburant additivé, le liquide primaire étant un hydrocarbure et le liquide secondaire étant un liquide choisi parmi les additifs, les colorants et les dénaturants pour carburants. A titre d'exemple on peut citer comme hydrocarbure un carburant pour moteur diesel, les additifs étant un améliorant d'indice de cétane et un antimoussant.

Selon une autre caractéristique particulière, le composé préparé est un lubrifiant additivé, le liquide primaire étant un lubrifiant et le liquide secondaire un additif sous forme liquide.

Selon une autre caractéristique particulière, le composé liquide préparé est un prémélange pour la génération de mousse, le liquide primaire étant de l'eau et le liquide secondaire un agent émulsifiant.

**BREVE DESCRIPTION DES DESSINS**

L'invention sera mieux comprise à la lecture de la description détaillée d'un mode particulier de réalisation en référence aux dessins annexés dans lesquels :

- la figure 1 représente schématiquement un appareil pour la préparation d'un gazole additivé.

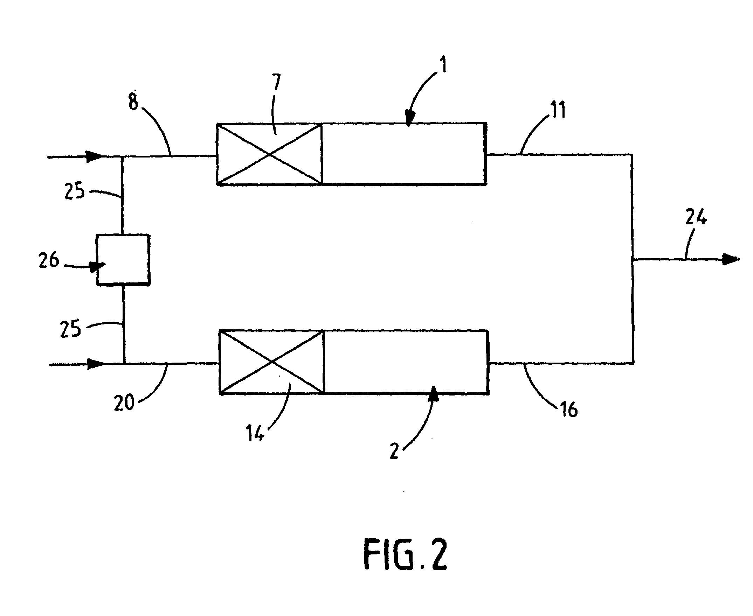

- la figure 2 représente schématiquement un appareil équipé de moyens automatiques reliant la tubulure d'alimentation du moteur à la tubulure d'admission de la pompe.

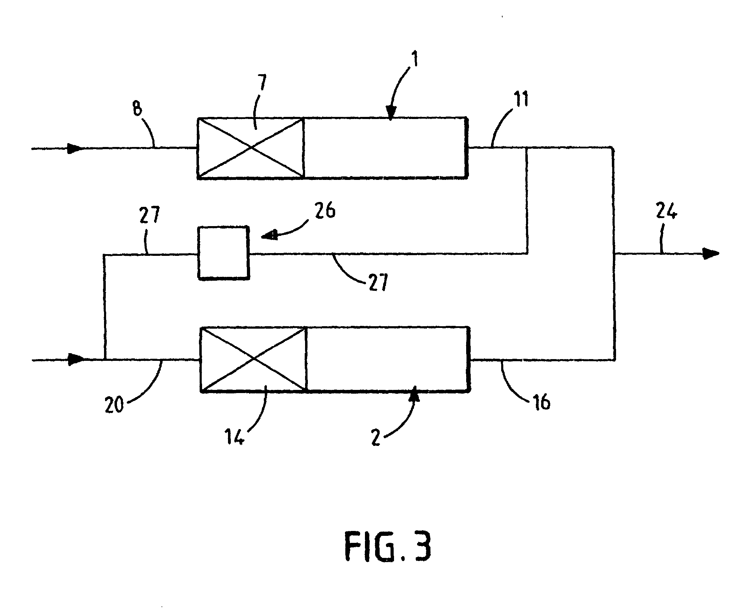

- la figure 3 représente schématiquement un appareil équipé de moyens automatiques reliant la tubulure de sortie du moteur à la tubulure d'admission de la pompe.

**EXPOSE DETAILLE DE L'INVENTION**

D'une manière générale le dispositif de l'invention est destiné à produire un mélange de liquides dans des proportions déterminées.

Selon un mode particulier de réalisation le dispositif de l'invention permet d'asservir un débit d'un liquide secondaire constitué par un additif sous forme liquide au débit d'un liquide primaire constitué par un gazole disponible dans une conduite sous pression. Le dispositif fonctionne par prélèvement d'énergie sur le gazole sous pression. Il est donc autonome.

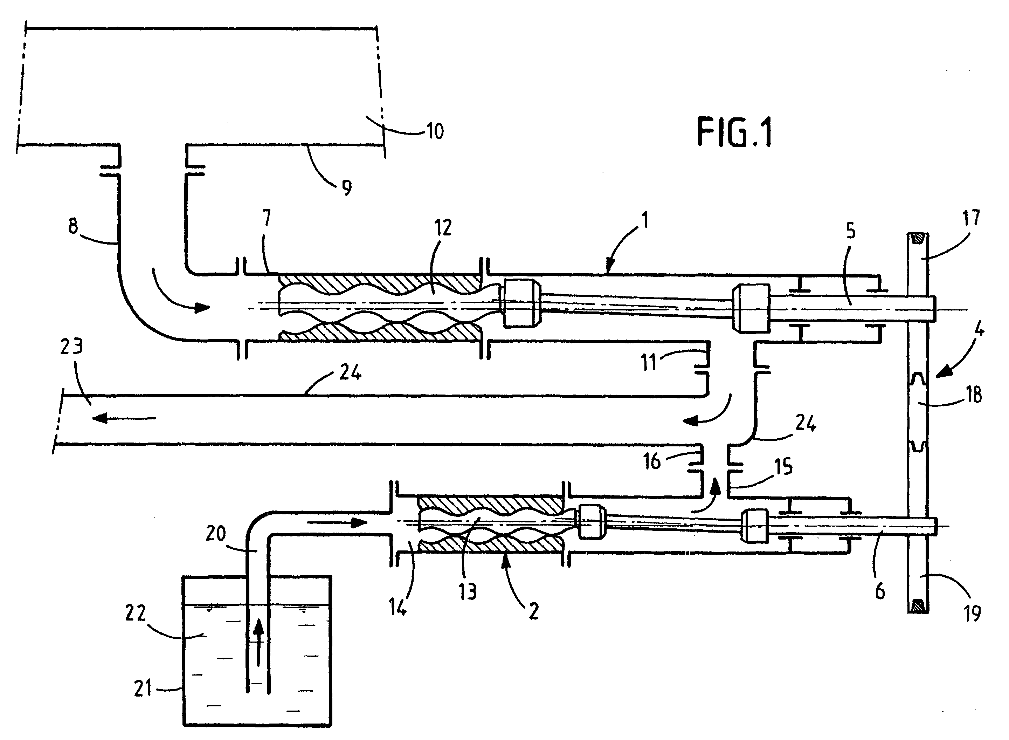

La figure 1 représente schématiquement un mode particulier de réalisation du dispositif de l'invention qui comporte :

- un moteur 1 hydraulique volumétrique à rotor 12 excentré muni d'un axe 5,
- une pompe 2 à rotor 13 excentré muni d'un axe 6,
- une liaison 4 mécanique des axes 5 et 6 par deux poulies 17 et 19 et une courroie 18,

Les axes 5 et 6 sont disposés parallèlement. La tubulure 7 d'alimentation du moteur 1 est reliée par un tuyau 8 à la conduite 9 d'un réseau de fabrication de gazole 10 sous pression. La tubulure 11 de sortie du moteur 1 est prolongée par la conduite 24 qui alimente un réseau de distribution de gazole à une pression inférieure à la pression de la conduite 9 du réseau de fabrication. La tubulure 14 d'admission de la pompe 2 est reliée par le tuyau 20 à l'intérieur d'un bac 21 de stockage d'un additif 22 à la pression atmosphérique. La tubulure 15 de sortie de la pompe 2 est reliée par un tuyau 16 à la conduite 24.

Le gazole 10 sous pression dans la conduite 9 traverse le moteur 1 en agissant sur le rotor 12 qui est ainsi entraîné en rotation. Son axe 5 muni de la poulie 17 entraîne par l'intermédiaire de la courroie 18 la poulie 19 elle-même solidaire de l'axe 6 du rotor 13 de la pompe 2. La rotation du rotor 13 provoque l'aspiration de l'additif 22 contenu dans le bac 21, par l'intermédiaire de la conduite 20. Cet additif est injecté dans la conduite 24 par l'intermédiaire du tuyau 16, dans laquelle il se mélange au gazole qui a traversé le moteur 1 pour former un gazole additivé qui alimente le réseau de distribution.

Le nombre n1 de tours du rotor 12 du moteur 1 et de son axe 5 est proportionnel au volume V1 de gazole qui circule dans la conduite 8 et traverse le moteur 1. Pour un jeu donné de poulies 17 et 19 le nombre de tours n2 de l'axe 6 et du rotor 13 de la pompe 2 sont proportionnels. Une des caractéristiques de la pompe 2 étant de débiter un volume V2 de liquide proportionnel au nombre de tours de son rotor 13, le débit d'additif injecté dans la conduite 24 est proportionnel au débit de gazole dans cette conduite.

Si D1 et D2 sont les diamètres respectifs des poulies 17 du moteur 1 et 19 de la pompe 2, on a la relation suivante : n1/n2 = D2/D1

Si k1 est le coefficient de proportionnalité entre le nombre de tours du rotor 12 du moteur 1 et le volume V1 de gazole.

Si k2 est le coefficient de proportionnalité entre le nombre de tours du rotor 13 de la pompe 2 et le volume V2 d'additif.

$$V1/V2 = (k1/k2) \times (D2/D1) = \text{constante}$$

Ce rapport volumétrique est facilement modifiable sans démontage de tuyauteries en changeant simplement le jeu de poulies 17 et 19.

Plusieurs pompes peuvent être couplées à l'axe 5 du moteur 1 pour injecter plusieurs additifs dans des proportions souhaitées.

**Revendications**

1. Dispositif autonome d'asservissement d'au moins un débit d'un liquide secondaire à un débit d'un liquide primaire disponible dans une conduite (9) sous pression, comprenant un moteur (1) hydraulique muni d'une tubulure (8) d'alimentation en liquide primaire et d'une tubulure de sortie (11), au moins une pompe (2) volumétrique, munie d'une tubulure (20) d'admission du liquide secondaire et d'une tubulure (15) de refoulement, et des moyens mécaniques d'entraînement de la pompe (2) par le moteur (1) hydraulique, les axes du moteur (1) hydraulique et de la pompe (2) volumétrique étant disposés parallèlement, **caractérisé en ce que** le moteur (1) hydraulique est du type à rotor excentré, les moyens mécaniques d'entraînement de la pompe sont à une vitesse réglable et que le dispositif comprend en outre des moyens d'alimentation automatique de la pompe (2) volumétrique par du liquide primaire en cas de manque de liquide secondaire.

2. Dispositif selon la revendication 1, **caractérisé en ce que** les moyens mécaniques d'entraînement sont du type poulies/courroie.

3. Dispositif selon la revendication 1 ou 2, **caractérisé en ce que** les moyens d'alimentation automatique de la pompe (2) volumétrique comprennent une liaison (25) hydraulique de la tubulure (8) d'alimentation du moteur (1) à la tubulure (20) d'admission de la pompe (2), ladite liaison (25) hydraulique étant munie d'un limiteur (26) de débit.

4. Dispositif selon la revendication 1 ou 2, **caractérisé en ce que** les moyens d'alimentation automatique de la pompe (2) volumétrique comprennent une liaison (27) hydraulique de la tubulure de sortie (11) du moteur (1) à la tubulure (20) d'admission de la pompe (2), ladite liaison (27) hydraulique étant munie d'un limiteur (26) de débit.

5. Dispositif selon la revendication 3 ou 4 **caractérisé en ce que** le limiteur (26) de débit est une plaque à orifice calibré.

6. Application du dispositif selon l'une quelconque des revendications 1 à 5, à la préparation d'un composé liquide par mélange dans des proportions déterminées d'un liquide primaire et d'au moins un liquide secondaire.

7. Application selon la revendication 6, **caractérisée en ce que** le composé liquide préparé est un carburant additivé, le liquide primaire étant un hydrocarbure et le liquide secondaire étant un liquide choisi parmi les additifs, les colorants et les dénaturants pour carburants.

8. Application selon la revendication 6, **caractérisée en ce que** le composé préparé est un lubrifiant additivé, le liquide primaire étant un lubrifiant et le liquide secondaire un additif sous forme liquide.

9. Application selon la revendication 6 **caractérisée en ce que** le composé liquide préparé est un prémélange pour la génération de mousse, le liquide primaire étant de l'eau et le liquide secondaire un agent émulsifiant.

**Patentansprüche**

1. Eigenständige Vorrichtung zum Regulieren von zumindest dem Durchsatz einer Sekundärflüssigkeit in Bezug auf einen Durchsatz einer Primärflüssigkeit, die in einer Leitung (9) unter Druck verfügbar ist, umfassend einen Hydraulikmotor (1), der mit einem Primärflüssigkeits-Speiserohrstück (8) und einem Austrittsrohrstück (11) ausgestattet ist, mindestens eine Verdrängervakuumpumpe (2), ausgestattet mit einem Sekundärflüssigkeits-Zuleitungsrohrstück (20) und einem Förderrohrstück (15), und eine mechanische Einrichtung zum Antreiben der Pumpe (2) durch den Hydraulikmotor (1), wobei die Achsen des Hydraulikmotors (1) und der Verdrängervakuumpumpe (2) parallel zueinander angeordnet sind, **dadurch gekennzeichnet, daß** der Hydraulikmotor (1) vom Exzenterrotor-Typ ist, daß die mechanische Einrichtung zum Antreiben der Pumpe eine regelbare Geschwindigkeit aufweist, und daß die Vorrichtung außerdem eine automatische Speisevorrichtung der Verdrängervakuumpumpe (2) zum Speisen mit Primärflüssigkeit im Fall eines Sekundärflüssigkeitsmangels aufweist.

2. Vorrichtung nach Anspruch 1, **dadurch gekennzeichnet, daß** die mechanische Antriebseinrichtung vom Typ mit Riemenscheiben/Antriebsriemen ist.

3. Vorrichtung nach Anspruch 1 oder 2, **dadurch gekennzeichnet, daß** die automatische Speisevorrichtung für die Verdrängervakuumpumpe (2) eine hydraulische Verbindung (25) des Speiserohrstücks (8) des Motors (1) mit dem Zuleitungsrohrstück (20) der Pumpe (2) aufweist, wobei die hydraulische Verbindung (25) mit einem Durchflußbegrenzer (26) ausgerüstet ist.

4. Vorrichtung nach Anspruch 1 oder 2, **dadurch gekennzeichnet, daß** die Einrichtung zum automatischen Speisen der Vakuumverdrängerpumpe (2) eine hydraulische Verbindung (27) des Austrittsrohrstücks (11) des Motors (1) mit dem Speiserohrstück (20) der Pumpe (2) aufweist, wobei die hydraulische Verbindung (27) mit einem Durchflußbegrenzer (26) ausgestattet ist.

5. Vorrichtung nach Anspruch 3 oder 4, **dadurch gekennzeichnet, daß** der Durchflußbegrenzer (26) eine Platte mit kalibrierter Öffnung ist.

6. Verwendung der Vorrichtung nach einem der Ansprüche 1 bis 5 bei der Herstellung einer Flüssigkeitszusammensetzung durch Vermischen einer Primärflüssigkeit und mindestens einer Sekundärflüssigkeit in vorbestimmten Verhältnissen.

7. Verwendung nach Anspruch 6, **dadurch gekennzeichnet, daß** die hergestellte zusammengesetzte Flüssigkeit ein Treibstoff-Additiv ist, wobei die Primärflüssigkeit ein Kohlenwasserstoff und die Sekundärflüssigkeit eine Flüssigkeit ist, die ausgewählt ist aus den Additiven, den Färbungsmitteln und den Denaturierungsmitteln für Treibstoffe.

8. Anwendung nach Anspruch 6, **dadurch gekennzeichnet, daß** die hergestellte Zusammensetzung ein mit Additiv versehenes Schmiermittel ist, wobei die Primärflüssigkeit ein Schmiermittel und die Sekundärflüssigkeit ein Additiv in flüssiger Form ist.

9. Anwendung nach Anspruch 6, **dadurch gekennzeichnet, daß** die hergestellte flüssige Zusammensetzung ein Vorgemenge zur Erzeugung eines Schaumstoffs ist, wobei die Primärflüssigkeit Wasser und die Sekundärflüssigkeit ein Emulgiermittel ist.

**Claims**

1. A self-contained device for controlling at least a flow rate of a secondary fluid as a function of a flow rate of a primary fluid available in a pressurised conduit (9), comprising a hydraulic motor (1) provided with a primary fluid feed pipe (8) and an outlet pipe (11), at least one positive displacement pump (2) provided with a secondary fluid inlet pipe (20) and a discharge pipe (15), and mechanical means for driving said pump (2) by the hydraulic motor (1), the axes of said hydraulic motor (1) and positive displacement pump (2) being parallel, **characterised in that** the hydraulic motor (1) is of the eccentric rotor type, the mechanical means for driving said pump are of an adjustable speed type and **in that** said device further comprises means for automatically feeding said positive displacement pump (2) with primary fluid should secondary fluid be absent.

2. The device according to claim 1, **characterized in that** said mechanical driving means are of the pulley and belt type.

3. The device according to claim 1 or 2, **characterised in that** the means for automatically feeding said positive displacement pump (2) comprise a hydraulic line (25) from said motor feed pipe (8) to said pump inlet pipe (20), said hydraulic line (25) being provided with a flow restrictor (26).

4. The device according to claim 1 or 2, **characterised in that** the positive displacement pump (2) automatic feed means comprise a hydraulic line (27) from said motor (1) outlet pipe (11) to said pump (2) inlet pipe (20), said hydraulic line (27) being provided with a flow restrictor (26).

5. The device according to claim 3 or 4, **characterized in that** the restrictor (26) for flow is a calibrated orifice plate.

6. The application of the device according to any one of claims 1-5 to the preparation of a liquid composition by mixing a primary fluid and at least one secondary fluid in determined proportions.

7. The application according to claim 6, **characterised in that** the prepared fluid composition is a fuel having additives, said primary fluid being a hydrocarbon and said secondary fluid being a fluid chosen from the group comprising additives, colouring agents and denaturing agents for fuels.

8. The application according to claim 6, **characterised in that** the composition prepared is a lubricant incorporating additives, said primary fluid being a lubricant and said secondary fluid being an additive in liquid form.

9. The application according to claim 6, **characterised in that** the fluid composition prepared is a pre-mixture for foam generation, the primary fluid being water and the secondary fluid being an emulsifying agent.

FIG.1

EP 0 834 788 B1

FIG.2

EP 0 834 788 B1

FIG.3